# EUROPEAN PATENT APPLICATION

(11) **EP 4 776 123 A1**
(43) Date of publication of application: **15.07.2026**
(21) Application number: 26151596.9
(22) Date of filing: 13.01.2026
(51) Int. Cl.: G06F 8/65, G06F 8/77, G06F 9/455, G06F 11/34

(54) **NETWORK RESOURCE CODE UPDATES FOR REAL TIME DATA**

(30) Priority: 13.01.2025 US 202519019368
(71) Applicant: Capital One Services, LLC, McLean, Virginia 22102 (US)
(72) Inventor: DOUGLAS, Lawrence, McLean, VA 22102 (US); EMERSON, Timothy, McLean, VA 22102 (US); BHAGARE, Ashish, McLean, VA 22102 (US); PINSKI, David Aaron, McLean, VA 22102 (US)
(74) Representative: Boult Wade Tennant LLP

(57) **Abstract**

Described herein are systems, methods, and programming for determining network resource code updates in real time while also reducing network resource consumption used to determine performance impacts of the network resource code updates. Updates to code portions may be generated and evaluated in a secure virtual computing space for an event of a sequence of events. If the updates to the code portions satisfy processing conditions, other events from the sequence may be evaluated against the same updates. A retroactive analysis of a portfolio of authorized accounts, each including a respective sequence of events, may be analyzed to determine the impact of the network resource code updates to the portfolio.

## Description

### BACKGROUND

Code updates are generally challenging. Updates need to be tested before being deployed. However, the tests can use data that, for a multitude of reasons, differs from data the code expects, making the results erroneous and unreliable. Deploying the code with an error can lead to a slew of issues as well, such as security vulnerabilities, data loss, and malfunctioning instruments.

### SUMMARY

Methods and systems are described herein for novel uses and/or improvements to updating network resource code. In particular, the systems and methods can determine network resource code updates in real time while reducing network resource consumption used to determine performance impacts of network resource code updates.

There are many challenges faced when updating network resource code, particularly when the network resource code is executed by network resources providing core services for clients. It is impractical to take these core services offline due to their consistent and frequent client usage. Furthermore, depending on the core services, the data needed to evaluate the network resource code updates may be siloed to prevent exposure of secure data during these evaluations. As a result of these challenges, network resource code causing errors or performing less than optimally can continue to be used by network resources providing core services to clients.

To solve some or all of the above-described technical problems, systems, methods, and programming are described herein for determining network resource code updates in real-time while reducing network resource consumption used to determine performance impacts of the network resource code updates. Updates to portions of network resource code (e.g., code portions) can be evaluated within a virtual computing environment for a single event. The virtual computing environment can be provisioned with the original network resource code (or the original code portion that is being updated) and the updated network resource code (or the updated code portion). A single event from a sequence of events of an authorized account may be selected and provided to the virtual computing environment. There, the event can be evaluated using the original network resource code and the updated network resource code to obtain performance scores. The performance scores can be evaluated to determine whether the updated network resource code improves the performance of the network resource performing the core services. If so, additional events from the sequence of events may be identified. These events may be similar to the selected event (e.g., these selected events are impacted by the (updated) code portion).

For each of the additional events, a virtual computing environment may be provisioned with the original network resource code and the updated network resource code. Each virtual computing environment may output performance scores indicating how the original network resource code and the updated network resource code performed when evaluating the corresponding additional event. These performance scores can be aggregated to determine account performance scores for the authorized account (e.g., based on the sequence of events) for the original and updated network resource code. The account performance scores may be evaluated to determine whether the updated network resource code improves the performance for the authorized account. If so, additional authorized accounts from a portfolio of authorized accounts may be identified and evaluated. For example, portfolio performance scores may be computed by determining whether the updated network resource code improves the performance of the portfolio related to the original network resource code. If so, then the updated network resource code can be deployed for use by the network resource when providing the core services.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative system for determining network resource code updates, in accordance with one or more embodiments.
FIG. 2 shows illustrative databases used to store account data and event data, in accordance with one or more embodiments.
FIGS. 3A-3B show illustrative diagrams of systems for evaluating an update to network resource code, in accordance with one or more embodiments.
FIG. 4 shows an illustrative diagram of a system for evaluating an update to network resource code on a portfolio of authorized accounts, in accordance with one or more embodiments.
FIG. 5 shows illustrative components of a system used to determine network resource code updates, in accordance with one or more embodiments.
FIG. 6 shows an illustrative flowchart of an example process for determining network resource code updates, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

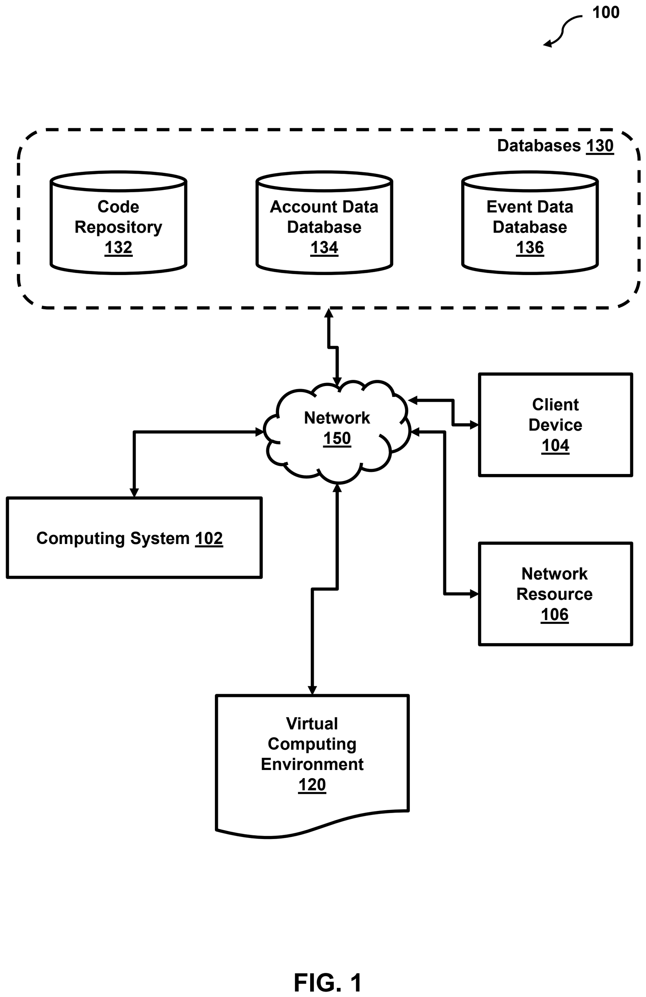

FIG. 1 shows an illustrative system 100 for determining network resource code updates, in accordance with one or more embodiments. For example, system 100 of FIG. 1 illustrates a computing system 102, a client device 104, a network resource 106, a virtual computing environment 120, databases 130 (e.g., code repository 132, account data database 134, event data database 136, etc.), or other components. Computing system 102 may communicate with client device 104, network resource 106, virtual computing environment 120, databases 130, or other devices, systems, servers, or combinations thereof, using one or more networks, such a network 150. Network 150, for example, may comprise the Internet or any other communications network (e.g., one or more satellite communications networks, one or more space-based communications networks, one or more Intranets, etc.). Furthermore, while a single instance of certain components is depicted in FIG. 1 (e.g., computing system 102, client device 104, network resource 106, virtual computing environment 120, code repository 132, account data database 134, event data database 136), persons of ordinary skill in the art will recognize that this is merely illustrative, and additional computing systems, client devices, databases, or other components, may be included in system 100.

Cloud computing refers to the delivery of computing services over a network (e.g., network 150). For example, the network may include the Internet (the cloud) and may be configured to offer on-demand access to a variety of network resources, including computing power resources, storage resources, databases resources, networking resources, and/or software resources, without direct management or control of the underlying infrastructure by a user. A key characteristic of cloud computing is that it allows for the quick and flexible scaling of network resources (e.g., network resource 106) up or down based on demand. To provide this rescaling, the network resources (e.g., network resource 106) in the cloud computing network (e.g., system 100) must maintain connectivity to the network. If a network resource loses connectivity to the network (e.g., connection to network 150 is lost), the network resource may no longer be available or have a capacity for use.

As described herein, a network resource (also referred to herein interchangeably as a "resource"), such as network resource 106, refers to any entity or component within system 100 that is made available and accessible for use by network users, applications, or devices (e.g., computing system 102, client device 104, etc.). These network resources can be hardware devices, software applications, or data that are shared across system 100 for various purposes. Some examples of network resources (e.g., network resource 106) include hardware network resources, software network resources, data network resources, and others.

Hardware network resources may include physical devices connected to system 100 (i.e., physical connection mechanisms, such as wires, adapters, logic structures, etc.; or digitally via network 150) that can be shared among multiple users or applications. Examples of hardware network resources (also referred to herein interchangeably as "hardware resources") include printers, scanners, servers, routers, switches, storage devices (like NAS - Network Attached Storage), and other peripheral devices. Software network resources (also referred to herein interchangeably as "software resources") may include software applications, programs, or services made available for access and utilization by components of system 100. Examples may include shared databases, file servers, web servers, email servers, application servers, and any other software-based services accessible to network users. Data network resources (also referred to as "data resources") refer to information or data stored and shared within the network. Examples may include shared files, documents, databases, multimedia content, and any other data that can be accessed and utilized by authorized users or applications within the network.

Network resources are typically made accessible through a process called resource sharing or resource sharing protocols, which allow authorized users or devices to access, use, or modify, via the components of system 100, these resources based on permissions and security configurations set by the network administrators. For instance, in a client-server network model, a server could host resources such as files or applications (e.g., via network resource 106), and client devices (e.g., client device 104) can request access to these resources over network 150. Access control mechanisms, such as user authentication and permissions, regulate who can access specific network resources and what actions they can perform on those resources. For example, some authorized accounts may have permissions granted to use a specific network resource (e.g., a router) but lack permissions to access another specific network resource (e.g., a printer).

**In** some embodiments, network resources (e.g., network resource 106) may encompass a wide array of assets, tools, and components. As an example, the network resources may include resources that are essential for conducting operations, delivering services, managing finances, and supporting a financial service firm's overall functioning of a resource including financial assets. Examples of financial assets include cash reserves, investments, securities, loans, and other financial instruments held by the firm or managed on behalf of clients. For example, a resource corresponding to a user may comprise a bank account for that user.

**In** some embodiments, a network resource (e.g., network resource 106) may comprise a bank branch or other subdivision of a firm and/or an amount of liquidity for a bank branch or subdivision. For example, when a network resource is a bank branch or other subdivision, the resource may go on and/or off-line based on the operating hours (or regulated trading hours) for the bank branch or subdivision. For example, banks and financial institutions often have specific business hours during which their systems and staff are available to process transactions. Outside these hours, certain banking functions, including fund transfers, may not be processed immediately. Some financial regulations or rules may limit or dictate the processing of certain types of transactions or transfers after regular business hours for security, compliance, or fraud prevention purposes. Banks may also risk management measures in place to detect and prevent fraudulent activities. Transactions initiated after hours may be flagged for additional scrutiny to ensure they are legitimate, which could cause delays.

Network resource 106 may execute network resource code to perform one or more actions. For example, network resource 106 may execute network resource code used to process real-time production data. The real-time production data may include streaming data received from one or more end-user applications or other streaming applications. Real-time production data, as described herein, refers to a continuous flow of application data from a corresponding real-time application. For example, a real-time application may generate and output production data. Data feeds may receive production data for a predetermined amount of time. For example, the production data may be provided to a corresponding data feed within a data stream. In some cases, the production data may not be stored persistently by the corresponding data feed. In some cases, the production data may be buffered to local cache by a computing system (e.g., computing system 102) associated with the data feed or a database (e.g., event data database 136), which may be periodically purged to receive new production data from the real-time application.

As referred to herein, a system (e.g., system 100) and/or computing system (e.g., computing system 102) may refer to a network of interconnected computers and other devices that are linked together to share resources, information, and services. These networks can be established using various technologies and configurations, allowing devices to communicate and exchange data with each other. In some embodiments, the computer network may comprise a network for a financial services firm.

**In** some embodiments, the system (e.g., system 100) and/or computing system (e.g., computing system 102) may refer to the interconnected system of computers, devices, and infrastructure specifically designed and configured to support the operations and services provided by a financial service firm and/or the financial industry. The network infrastructure may enable the firm to process transactions efficiently and securely. This includes services like online banking, wire transfers, trading platforms for stocks and securities, electronic fund transfers, and other financial transactions. For example, financial firms often require connectivity to various financial markets, exchanges, and data providers. The network infrastructure allows access to real-time market data, trade execution platforms, and connections to external financial systems.

In some embodiments, the system (e.g., system 100) and/or computing system (e.g., computing system 102) may comprise a global payment network that facilitate credit and debit card transactions. The network may connect issuing banks, acquiring banks, merchants, and cardholders, enabling electronic payments at point-of-sale terminals and online. In some embodiments, the computer network may comprise an ACH (Automated Clearing House). An ACH is a network used for electronic fund transfers and direct deposits in the United States. It enables the processing of large volumes of credit and debit transactions, including payroll deposits, bill payments, and person-to-person transfers. In some embodiments, the computer network may comprise a SWIFT (Society for Worldwide Interbank Financial Telecommunication) network. SWIFT is a global messaging network used by financial institutions for secure communication and the transfer of financial messages, particularly for international transactions and cross-border payments. In some embodiments, the computer network may comprise a blockchain network.

As described herein, a "platform application" may refer to software or an application that serves as a foundation or infrastructure for developing and deploying other software applications or services using one or more components of system 100. It provides a set of tools, frameworks, and functionalities upon which developers can build, integrate, and run applications. These platforms form the basis for running other software applications. Examples include Windows, macOS, Linux, iOS, and Android. They provide the necessary environment and services for software to execute on devices like computers, smartphones, and tablets (e.g., computing system 102).

In some embodiments, the platform application may be used to manage the availability of devices in system 100 (e.g., a "platform management application"). This type of platform application is designed to monitor, control, and manage various devices and components within a system to ensure their availability, performance, and security. The platform application may automatically identify and map devices present on the network, including computers, routers, switches, servers, printers, and other network-connected devices. The platform application may constantly monitor the status and performance metrics (such as bandwidth usage, CPU usage, memory, etc.) of network devices to identify any abnormalities or performance bottlenecks. In some embodiments, the platform application may comprise a platform application for a financial services firm. A platform application, in the context of a financial services firm or a global bank, typically refers to a software application or system that serves as a foundation or framework for delivering various financial services, managing transactions, facilitating communication, and supporting interactions between different entities within the firm or with external stakeholders such as clients, partners, or regulatory bodies. These platform applications may be designed to integrate multiple functionalities and services within a unified infrastructure. These functionalities and services may encompass various aspects such as banking operations (e.g., day-to-day banking operations including customer onboarding, account management, transaction processing, and compliance), trading (e.g., trading functionalities for various financial instruments like stocks, bonds, derivatives, and currencies), risk management (e.g., risk assessment and management tools to monitor and mitigate risks across different financial activities), Customer Relationship Management (CRM) (e.g., functionalities that manage client interactions, track customer preferences, and personalize services), data analytics and reporting (e.g., capabilities that derive insights from large volumes of financial data), compliance and regulatory requirements (e.g., features to ensure compliance with various financial regulations and standards), mobile and online banking (e.g., mobile applications and online banking portals).

Virtual computing environment 120 may be used to evaluate an update to a portion of network resource code to be executed by a network resource (e.g., network resource 106). The network resource code may be executed by the network resource when processing events, accounts, portfolios, or other data. In some embodiments, the network resource code may be stored locally on memory of network resource 106. Alternatively, some or all of the network resource code may be hosted by code repository 132. At runtime, network resource 106 can run pre-loaded network resource code and/or access network resource code stored by code repository 132.

In some embodiments, code repository 132 may store network resource code to be provided to virtual computing environment 120 to evaluate an update to a code portion of the network resource code. Virtual computing environment 120 can be provisioned with the necessary software to emulate the operations of a network resource (e.g., network resource 106) when evaluating an event (or multiple events).

Virtual computing environment 120 may be provided using a server, virtual machine, or a container. For example, a server may include a number of computing devices working together to host various software applications. However, this can lead to issues, particularly when the number of computing devices in the server stack, each establishing their own run time environment that can conflict. One solution to avoid these run time environment conflicts is to host the various software on separate virtual machines. A virtual machine has its own operating system, allowing software to run conflict-free. Unfortunately, virtual machines themselves are not without issues, as all of the virtual machines used can increase network resource consumption (e.g., network resource 106). A container refers to a secure computing space hosting a particular software application with its own runtime environment, avoiding runtime environment conflicts and avoiding a separate operating system to run the software. Thus, a container can access network resources (e.g., network resource 106) capable of being used by other container instances. Virtual computing environment 120 can be provided using a server, a virtual machine, a container, or a combination thereof.

An ephemeral container instance refers to a type of container that does not have guaranteed resources (e.g., network resource 106) or executions. Ephemeral containers can be similar to regular containers but lack ports and have immutable resource allocations. Ephemeral container instances are beneficial to use when restarting is not available. For example, core services provided by a network resource (e.g., network resource 106) may not be capable of being restarted. The ephemeral container represents a specialized container that can be added during execution. One advantage of ephemeral container instances is that once their task is complete, the underlying data used by the container is deleted. A container, as defined herein, refers to a prescribed software package including code and all necessary dependencies needed by an application or network resource to run quickly and reliably across computing environments. Differing from containers, ephemeral containers can be inserted into a running Kubernetes pod.

In some embodiments, one or more cloud compute services may be used to deploy a virtual machine configured to host virtual computing environment 120. Virtual machines include software that run on a physical computing device, such as a server or server stack. For example, network resource 106 can be implemented as a virtual resource.

Computing system 102 may include one or more subsystems that include computer program instructions (e.g., code) indicating actions to be performed by computing system 102, client device 104, network resource 106, virtual computing environment 120, or other components of system 100, or combinations thereof. Computing system 102 may include one or more modules, libraries, processors, memory, and the like. In some examples, computing system 102 is formed of a plurality of computing devices forming a network or system of computing devices. For example, computing system 102 may comprise a distributed computing system.

In some embodiments, computing system 102 may be configured to generate an update to a code portion of code executed by a network resource (e.g., network resource 106). The code may be stored in code repository 132. Code repository 132 can store code for software applications. For example, network resource code including computer program instructions to be executed by network resource 106 may be stored in code repository 132. The code stored in code repository 132 can be provided to a computing device (e.g., computing system 102, client device 104, network resource 106) for execution. In some cases, the code stored in code repository 132 may be used when provisioning virtual computing environment 120.

In some embodiments, to generate the update to the code portion, computing system 102 may be configured to receive a notification of a code error associated with the code portion. The update to the code portion may be generated based on the code error. For example, the notification of the code error may be received from a client device (e.g., client device 104). The client device can provide the notification in response to detecting an error, such as a code error, associated with a portion of the network resource code executed by network resource 106. In response to executing the network resource code, network resource 106 may output an error message. The error message may be presented to a user via the client device. The error message can indicate the code portion associated with the detected error, as well as any stack traces or other data associated with the error. In some cases, the notification may be generated in response to a determination that a threshold number of instances of a code error have been detected. For example, a code portion of network resource code executed by network resource 106 to control a transformation of a first resource amount to a second resource amount may include a defect. In response to the defect being detected the threshold number of instances (e.g., 10 or more times, 100 or more times, 1,000 or more times, etc.), the notification can be generated to update the code portion.

In some embodiments, to generate the update to the code portion, computing system 102 may be configured to receive, from a client device (e.g., client device 104), an instruction including the update to the code portion. For example, a user operating client device 104 may be configured to generate the update to the code portion. A user can input code fixes, software updates, resource mappings, or other information used by network resource 106 when processing the network resource code.

In some embodiments, computing system 102 may be configured to generate the update to the code portion of the network resource code using one or more artificial intelligence models. For example, a generative artificial intelligence model may be employed to generate updates to code portions. Generative artificial intelligence models can be trained to identify errors in code and generate updates to correct those errors. These generative artificial intelligence models can be developed internally (e.g., by components of system 100) or external models, such as Codex, ChatGPT, LLaMA, and the like.

In some embodiments, the code updates may include updates to computer program language that updates a specific portion of the network resource code. For example, the code portion to be updated may comprise a library dependency correction, a typographical correction, a test module incorporation, or other types of updates. The update may include just the update to the code portion or the update may include an updated version of the network resource code, which itself can include the update to the code portion.

In some embodiments, computing system 102 may be configured to compute, using a virtual computing environment (e.g., virtual computing environment 120), based on a first event of a sequence of events of an authorized account, a first score. The first score may be computed based on the network resource processing the event using the code portion. In some embodiments, computing system 102 may be configured to compute a second score based on the network resource processing the event using the update to the code portion. The second score may be computed using a virtual computing environment. In some examples, the first score and the second score may be computed using the same virtual computing environment (e.g., virtual computing environment 120).

The sequence of events of an authorized account refers to events that are associated with a given user's authorized account stored by account data database 134. In some embodiments, computing system 102 may provide one or more services, which themselves may include access to network resource 106, to client devices (e.g., client device 104). For example, computing system 102 may provide financial (e.g., banking) services, communications (e.g., LTE, Internet) services, computing (e.g., cloud resources) services, and the like. Users can register for such services with computing system 102. The services may be free of charge or may have an associated cost.

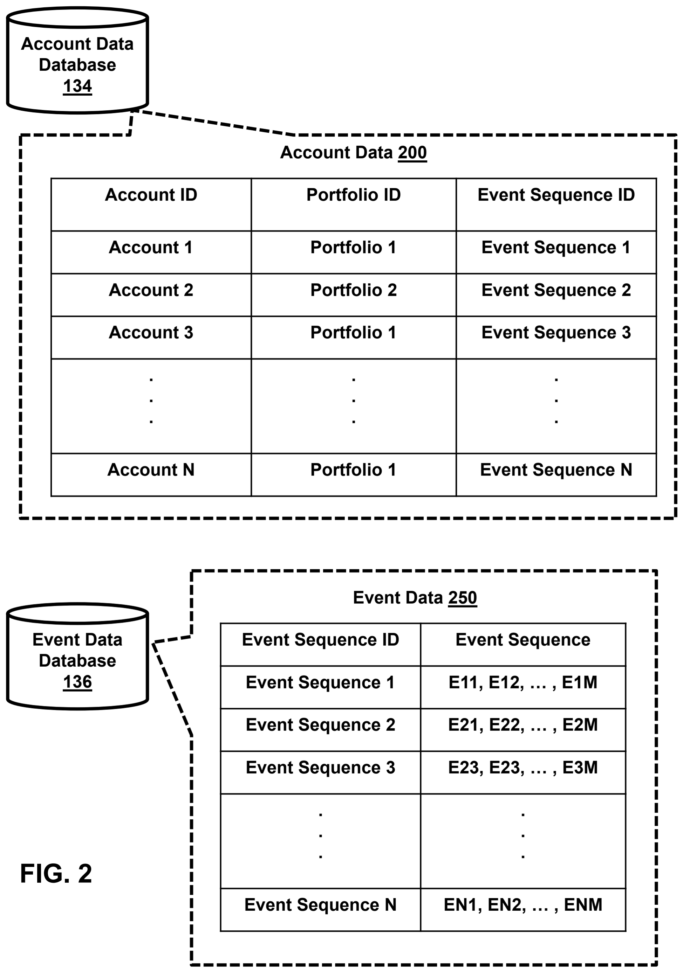

**In** some examples, each registered user may have an authorized account created for them that allows the user to access, via their client device (e.g., client device 104), the services provided by computing system 102. When a new user is created, a new record can be added to account data database 134. As an example, with reference to FIG. 2, account data database 134 may store account data 200. Account data 200 may store data associated with a plurality of authorized accounts. Each authorized account can include an account identifier (e.g., Account 1, Account 2, ... , Account N). The account identifier may be unique for each authorized account. The account identifier may be chosen by a user (e.g., a username, email, ID number, etc.), or may be assigned by computing system 102. For example, the account ID may be a random string of characters uniquely generated for each account. In some examples, account data 200 may include account data associated with *N* authorized accounts. Here, *N* can be 1 or more accounts, 100 or more accounts, 10,000 or more accounts, 1,000,000 or more accounts, or other values.

Each authorized account stored in account data 200 may include a portfolio identifier (e.g., Portfolio 1, Portfolio 2, etc.) and an event sequence identifier (e.g., Event Sequence 1, Event Sequence 2, ... , Event Sequence N). The portfolio identifier can indicate a portfolio that a particular authorized account is associated with. For example, a portfolio may include a plurality of authorized accounts. Performances of individual authorized accounts can be combined when analyzing the portfolio. Storing authorized accounts together in a portfolio allows for authorized accounts to cushion against risky/poor performing authorized accounts, while also dampening positively performing accounts relative to others in the portfolio. The event sequence identifier (e.g., Event Sequence 1, Event Sequence 2, ... , Event Sequence N) can correspond to a sequence of events associated with a particular authorized account. For example, a first authorized account (e.g., corresponding to "Account 1") may be associated with a first sequence of events (e.g., corresponding to "Event Sequence 1").

Each sequence of events may include two or more events associated with a particular authorized account. As seen by FIG. 2, event data database 136 may store event data 250, which can be referenced by account data 200. For example, the event sequence IDs may represent pointers to locations within event data database 136 where events associated with a given authorized account have been stored. Each event that occurs with respect to the authorized account may be logged in event data database 136. As an example, an event may represent a transaction performed using network resource 106. Network resource 106 may execute network resource code to perform a particular action (e.g., a transaction), which may be stored as an event in event data database 136. Therefore, as described herein, an event being processed by a network resource executing network resource code includes performance of an action or actions to one or more transactions occurring in connection with a particular authorized account. The stored events may include any account identifiers of accounts associated with the stored events, timestamps indicating a time that the event occurred, network resource identifiers indicating any network resources used, or other information, or combinations thereof.

**In** some embodiments, event data can be stored with account data 200, and a single database can be used in place of account data database 134 and event data database 136. In some embodiments, due to the volume of events that can be included in a given sequence of events, the event data can be separated from the account data to decrease latency when retrieving the event data.

A sequence of events may include a set of events that occur in an immutable order. For example, bank transactions with a banking service can represent a sequence of events. As another example, location data of a vehicle as it travels can represent a sequence of events. As yet another example, engagement data indicating different interactions detected with a content item can represent a sequence of events. The actual events can occur at random or predefined times. For example, location data may be captured at a predefined sampling rate (e.g., every second, every minute, every hour, etc.). Therefore, the event data can include a time series of locations indicating locations of the tracked vehicle, where each event in the event data represents a measured location of the vehicle at a given time. The event data can include time series data that is captured at a predefined sampling rate and semi-randomly. For example, the engagement data may track a number of interactions with a content item, service, network resource, etc., at a predefined cadence, similar to the prior example, however it can also include events associated with newly detected interactions or content. Still further, the event data can be random, such as in the case of transaction data, where each event represents a transaction. These transactions may not have a defined pattern, and therefore the amount of time between two sequential events can vary.

In the example of FIG. 2, event data 250 includes event sequence identifiers associated with each authorized account (e.g., Account 1-N). Each event sequence identifier may be associated with a sequence of events Ei thru Ej. For example, Event Sequence 1 may include events E11, E12, ... , E1M; Event Sequence 2 may include events E21, E22, ... , E2M, and so on. The number of events included in each sequence may be the same or different. For example, each sequence of events may include 10³ or more events, 10⁶ or more events, 10⁹ or more events, or other quantities of events. Furthermore, as mentioned above, the events in each sequence can be captured at different intervals. For example, the amount of time between event E11 and event E12 may be the same or different from the amount of time between event E12 and event E13. Furthermore, the amount of time between event E11 and event E12 may be the same or different from the amount of time between event E21, and event E22.

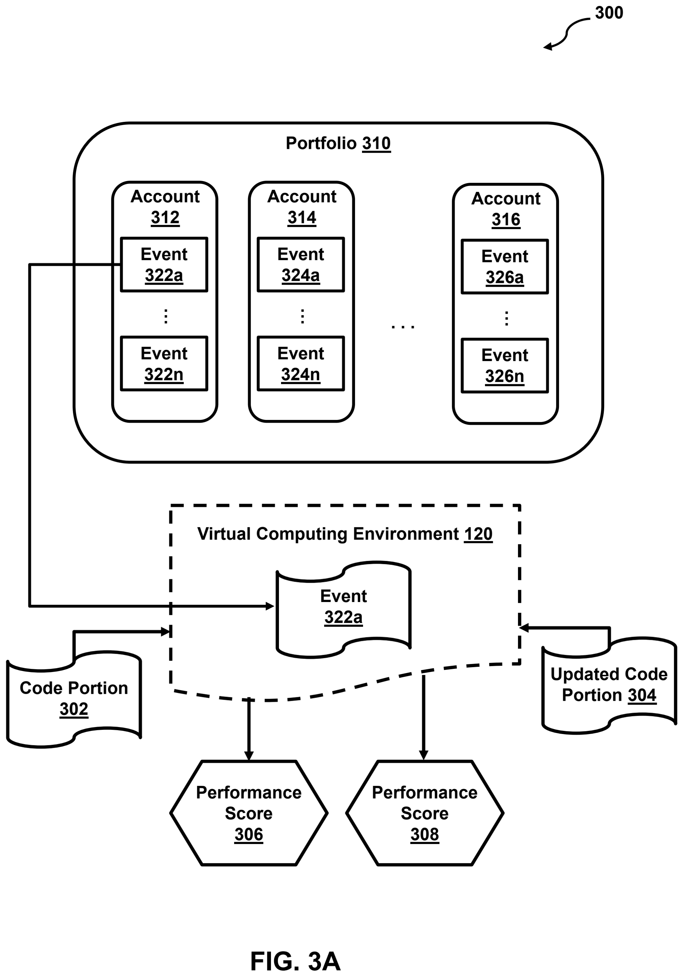

The first score may be computed based on the network resource processing the event using the code portion. The second score may be computed based on the network resource processing the event using the update to the code portion. As an example, with reference to FIG. 3A, system 300 illustrates aspects of determining performance scores for a network resource executing network resource code and updated network resource code to process an event. In some embodiments, virtual computing environment 120 may be provisioned with a code portion 302 of network resource code executed by a network resource (e.g., network resource 106 of FIG. 1). Virtual computing environment 120 can also be provisioned with an updated code portion 304 (interchangeably referred to herein as an update 304 to code portion 302). As mentioned above, updated code portion 304 represented an update to code portion 302.

In some embodiments, as mentioned above, updated code portion 304 may be generated based on a detected error with code portion 302. For example, execution of network resource code including code portion 302 may generate errors. When a threshold number of errors are generated, computing system 102 may determine that an update to code portion 302 is needed. Alternatively, computing system 102 can determine that an update to code portion 302 is needed to improve a performance of the network resource. For example, a new version of the network resource code may be developed at a particular cadence.

Computing system 102 can generate, or receive a generated version of (i.e., from client device 104), updated code portion 304 and/or the network resource code including updated code portion 304. In some embodiments, computing system 102 can generate updated code portion 304 using one or more artificial intelligence models, such as a trained generative artificial intelligence model.

Virtual computing environment 120 may also be provisioned with an event (e.g., event 322a). In some embodiments, the event may be selected from a sequence of events associated with an authorized account. For example, event 322a may correspond to an event from a sequence of events (e.g., events 322a-322n) associated with an authorized account 312. Authorized account 312 may refer to an authorized account of a user. Authorized account 312 may also be part of a portfolio 310 of authorized accounts, including authorized accounts 312-316. Each authorized account (e.g., authorized accounts 312-316) can include a sequence of events (e.g., events 324a-324n for authorized account 314; events 326a-326n for authorized account 316, etc.). In some embodiments, authorized accounts 312-316 may be included within portfolio 310 based on one or more features of each authorized account (e.g., a corresponding user, a type of account, prior events associated with the account, etc.).

In some embodiments, where the portfolio of authorized accounts (e.g., portfolio 310) includes a plurality of authorized accounts (e.g., authorized accounts 312-316), computing system 102 may be configured to compute, using a supplementary virtual computing environment, a portfolio performance gradient indicating an improvement to a performance of the authorized accounts included in the portfolio (e.g., portfolio 310) based on the network resource using network resource code including the update to the code portion (e.g., updated code portion 304). The instruction (e.g., deployment instruction 410) may be generated based on the portfolio performance gradient indicating the improvement.

In some embodiments, event 322a may be selected based on its type of event. For example, event 322a may be selected because it is processed by code portion 302 when the network resource code is executed by the network resource. Event 322a may be selected from the sequence of events 322a-322n associated with authorized account 312 based on a label included with event 322a indicating the type of event. If the sequence of events included multiple events labeled as being that same type of event, then event 322a may be selected from those events (e.g., randomly). In some examples, authorized account 312 may be selected from amongst the authorized accounts included in portfolio 310 based on a number of events included in its sequence of events (e.g., events 322a-322n) including a particular label (e.g., indicating that the corresponding event is evaluated using code portion 302). In some examples, authorized account 312 may be selected from the authorized accounts included in portfolio 310 randomly.

In some embodiments, computing system 102 may be configured to determine a label associated with the first event (e.g., event 322a). Computing system 102 may select the first event from the other events of the sequence (e.g., events 322a-322n) based on the label associated with the first event. For example, each event included in the sequence of events may include a label indicating a type of event. These labels may be stored as metadata with each event in the sequence. The types of events can be associated with different code portions of the network resource code used by network resource 106. Therefore, the label can be used to indicate which code portion (e.g., code portion 302) is to be evaluated and/or for which an update is to be generated (e.g., updated code portion). Computing system 102 may be configured to select event 322a based on the label associated with event 322a indicating its type of event. For example, if updated code portion 304 processes events of a particular type, event 322a may be selected to evaluate against updated code portion 304 and code portion 302 based on event 322a being of that particular type of event.

In some embodiments, computing system 102 may facilitate generation of virtual computing environment 120 for securely analyzing event 322a using code portion 302 and updated code portion 304. For example, virtual computing environment 120 may be provisioned for evaluation of code portion 302 and updated code portion 304 against event 322a. After these evaluations are completed, virtual computing environment 120 may be deleted, including all the data stored therein.

In some embodiments, virtual computing environment 120 can generate a first performance score and a second performance score. For example, virtual computing environment 120 may generate the first performance score (e.g., performance score 306) by causing network resource 106 or a virtual instance of network resource 106 (e.g., a simulated network resource) to process event 322a using code portion 302. Virtual computing environment 120 may store computer network resource code used by various network resources, such as network resource 106. Therefore, within virtual computing environment 120, event 322a can be evaluated using the network resource code and, in particular, the network resource code including code portion 302. Virtual computing environment 120 may generate the second performance score (e.g., performance score 308) by causing network resource 106 or a virtual instance of network resource 106 (e.g., a simulated network resource) to process event 322a using updated code portion 304. Within virtual computing environment 120, event 322a can be evaluated using the network resource code and, in particular, the network resource code including updated code portion 304.

In some examples, code portion 302 may be used to evaluate event 322a to generate performance score 306. However, in some cases, network resource code including code portion 302 (i.e., the software package) may be used to evaluate event 322a to generate performance score 306. Similarly, in some examples, updated code portion 304 may be used to evaluate event 322a to generate performance score 308. However, in some cases, network resource code including updated code portion 304 may be used to evaluate event 322a to generate performance score 308. In some examples, the computed scores (e.g., performance scores 306, 308) may represent how well the original and updated code portions of the network resource code evaluate a given event (e.g., event 322a). In some embodiments, the computed scores may be based on a reference performance score or reference value.

Returning to FIG. 1, computing system 102 may be configured to determine whether the first score and the second score satisfy one or more processing conditions associated with an improvement to a performance of the network resource. For example, a current version of network resource code used by a network resource (e.g., network resource 106) to process an event may produce a first performance score. An update to a portion of the network resource code can be generated and used by the network resource to process the event, obtaining a second performance score. A comparison of the first and second performance scores may indicate that the update to the code portion of the network resource code improves the performance of the network resource. Therefore, computing system 102 may determine that the update to the code portion (e.g., updated code portion 304 of FIG. 3A) improves the performance of the network resource (e.g., network resource 106) when processes an event (e.g., event 322a). This can indicate that the performance of a network resource may be improved if the network executed network resource code including the update to the code portion (e.g., updated code portion 304) in lieu of the initial code portion (e.g., code portion 302).

In some embodiments, computing system 102 may determine whether the first score and second score satisfy the processing conditions based on a comparison of the first score and/or the second score, or a combination of the first score and the second score, with one or more threshold scores. For example, computing system 102 may determine whether performance score 308 of FIG. 3A is greater than or equal to a threshold performance score. As another example, computing system 102 may determine whether a difference between performance scores 306 and 308 is greater than a threshold performance score. If so, then this can indicate that the first score and/or the second score satisfy the processing conditions.

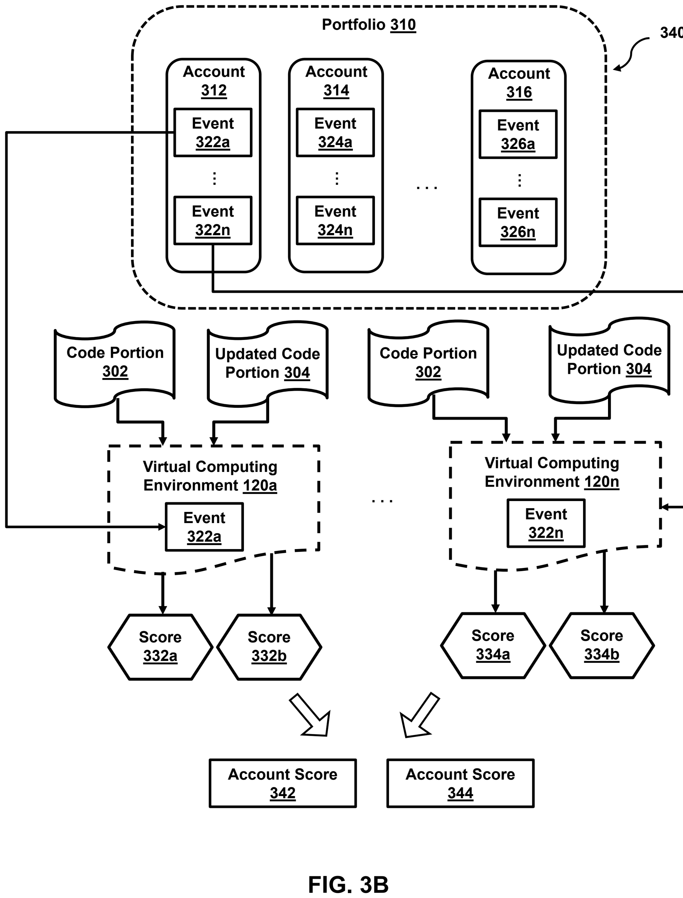

While the previous example describes the performance scores being associated with the evaluation of code portion 302 and updated code portion 304 against a single event (e.g., event 322a), the techniques described herein can also be used to evaluate a performance/improvement of updated code portion 304 when analyzing an entire account or a portfolio of accounts. For instance, in some embodiments, computing system 102 may be configured to compute, using one or more virtual computing environments, a first account score (e.g., account score 342) based on the network resource processing one or more additional events within the sequence of events using the code portion and a second account score (e.g., account score 344) based on the network resource processing the one or more additional events using the update to the code portion. As an example, with reference to FIG. 3B, system 340 includes identifying events 322a-322n from authorized account 312. In some embodiments, events 322a-322n (e.g., the sequence of events) may be identified for additional evaluations of updated code portion 304. Events 322a-322n may be selected based on the processing conditions being satisfied by updated code portion 304 when processing a single event (as seen in FIG. 3A). Although FIG. 3B illustrates event 322a being evaluated again subsequent to the evaluation performed in FIG. 3A, this is not intended to imply that the same event needs to be processed multiple times against the same updated code portion.

In some embodiments, events 322a-322n may be selected because they represent the sequence of events associated with authorized account 312. In some cases, however, events may be selected to evaluate the update to the code portion based on those events including a particular label or other metadata. For example, as mentioned above, event 322a may include a label indicating a particular type of event that event 322a corresponds to. The additional events may be selected from the sequence of events associated with authorized account 312 based on those events also including the same label, or otherwise being determined to be of the same type of event. In some examples, the additional events may be selected from the sequence of events based on other features, such as an attention score associated with that event, a position of the event within the sequence, or other aspects.

In some embodiments, computing system 102 may be configured to compute the first account score (e.g., account score 342) and the second account score (e.g., account score 344) by determining, for each of the one or more additional events, a corresponding first value computed by the network resource processing the additional event using the code portion. Computing system 102 may compute the first account score (e.g., account score 342) and the second account score (e.g., account score 344) by determining, for each of the one or more additional events, a corresponding second value computed by the network resource processing the additional event using the update to the code portion. Computing system 102 may compute the first account score (e.g., account score 342) and the second account score (e.g., account score 344) by aggregating the corresponding first value and the corresponding second value for each of the one or more additional events to obtain the first account score (e.g., account score 342) and the second account score (e.g., account score 344), respectively.

As an illustrative example, with reference to FIG. 3B, authorized account 312 may include events 322a-322n. In the illustrative example, events 322a-322n each are to be used to evaluate a performance of network resource code using code portion 302 and updated code portion 304. For each of the events (e.g., events 322a-322n), computing system 102 may provision/deploy a virtual computing environment. For example, virtual computing environment 120a may be provisioned with code portion 302 and updated code portion 304 to evaluate event 322a, virtual computing environment 120n may be provisioned with code portion 302 and updated code portion 304 to evaluate event 322n, and the like. Each virtual computing environment can execute the network resource code using code portion 302 and updated code portion 304 to generate performance scores indicating a performance of the updated code portion relative to the initial code portion for the corresponding event. For example, virtual computing environment 120a can output score 332a indicating a performance of the network resource when executing the network resource code including code portion 302 to evaluate event 322a and score 332b indicating a performance of the network resource when executing the network resource code including updated code portion 304 to evaluate event 322a. Similarly, virtual computing environment 120n can output score 334a indicating a performance of the network resource when executing the network resource code including code portion 302 to evaluate event 322n and score 334b indicating a performance of the network resource when executing the network resource code including updated code portion 304 to evaluate event 322n.

In some embodiments, computing system 102 may be configured to compute the first account score (e.g., account score 342) and the second account score (e.g., account score 344) by determining, for each of the one or more additional events (e.g., events 322a-322n), a corresponding first value (e.g., score 332a, 334a) computed by the network resource processing the additional event (e.g., events 322a, 322n) using the code portion (e.g., code portion 302). Computing system 102 may compute the first account score (e.g., account score 342) and the second account score (e.g., account score 344) by determining, for each of the one or more additional events, a corresponding second value (e.g., score 332b, 334b) computed by the network resource processing the additional event (e.g., events 322a, 322n) using the update to the code portion (e.g., updated code portion 304). Computing system 102 may compute the first account score and the second account score by aggregating the corresponding first value (e.g., scores 332a, 334a) and the corresponding second value (e.g., 332b, 334b) for each of the one or more additional events (e.g., events 322a-322n) to obtain the first account score (e.g., account score 342) and the second account score (e.g., account score 344), respectively.

In some embodiments, computing system 102 can determine that the first score (e.g., scores 332a, 334a) and the second score (e.g., scores 332b, 334b) satisfy the processing conditions by determining that the second score (e.g., scores 332b, 334b) is greater than the first score (e.g., scores 332a, 334a) or that the second score (e.g., scores 332b, 334b) is greater than or equal to a threshold score.

In some embodiments, computing system 102 may be configured to identify the additional events (e.g., events within the sequence of events associated with a particular authorized account) based on the first event (e.g., event 322a). In some embodiments, computing system 102 may be configured to determine a label associated with the first event. Computing system 102 may be further configured to select the additional events (e.g., events 322a-322n) within the sequence of events based on each of the additional events including the same label as the first event (e.g., event 322a).

In some embodiments, computing system 102 may be configured to provision an additional virtual computing environment (e.g., virtual computing environments 120a-120n) for each of the one or more additional events (e.g., events 322a-322n) with the code portion (e.g., code portion 302), the update to the code portion (e.g., updated code portion 304), and the additional event (e.g., a corresponding one of events 322a-322n). In some examples, each of the additional virtual computing environments may be provisioned based on the first score (e.g., scores 332a, 334a) and the second score (e.g., scores 332b, 334b) satisfying the one or more processing conditions.

In some embodiments, the first account score (e.g., account score 342) and the second account score (e.g., account score 344) may be computed in response to computing system 102 determining that the first score (e.g., scores 332a, 334a) and the second score (e.g., scores 332b, 334b) satisfy the processing conditions.

In some embodiments, computing system 102 may be configured to determine that the first account score and the second account score satisfy the processing conditions. In some embodiments, computing system 102 can determine that the first account score (e.g., account score 342) and the second account score (e.g., account score 344) satisfy the processing conditions by determining that the second account score is greater than the first account score or that the second account score is greater than or equal to a threshold account score. For example, computing system 102 may combine the first scores (e.g., scores 332a, 334a) to obtain the first account score (e.g., account score 342) and the second scores (e.g., scores 332b, 334b) to obtain the second account score (e.g., account score 344).

In some embodiments, computing system 102 may be configured to generate, based on the first account score and the second account score satisfying the one or more processing conditions, an instruction to retroactively determine an impact of the update to the code portion to analyze a portfolio of authorized accounts. For example, upon determining that the processing conditions have been satisfied by the first account score and the second account score, system 340 may be used for analyzing an account performance of some or all of the authorized accounts included within portfolio 310. Therefore, for each authorized account, a magnitude of a performance improvement (or conversely, performance worsening) imparted by the update to the code portion can be evaluated. The combined performance of all of the authorized accounts within portfolio 310 can be used to compute a portfolio improvement score.

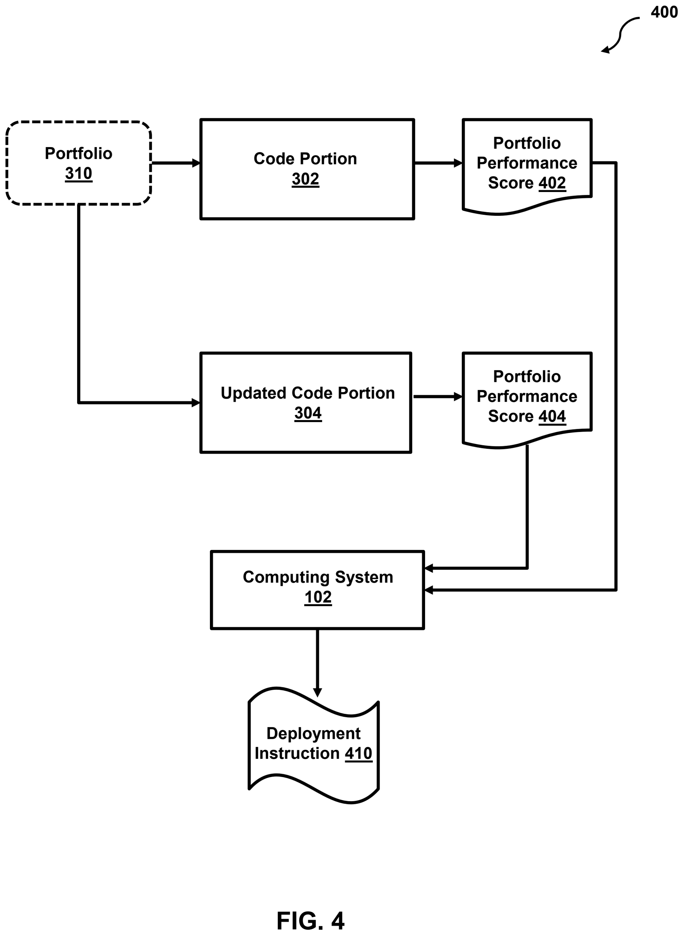

In some embodiments, computing system 102 being configured to generate the instruction comprises computing system 102 determining the impact of the update to the code portion to analyze the portfolio of authorized accounts by computing a portfolio performance score, wherein the instruction is generated based on the portfolio performance score exceeding a threshold portfolio performance score. As an example, with reference to FIG. 4, system 400 includes computing a first portfolio performance score 402 based on an analysis of each of the authorized accounts included in portfolio 310. The analysis includes evaluating a performance of a network resource executing network resource code including code portion 302 on each event included in the sequence of events (and/or including a particular label or other metadata indicating its applicability to code portion 302) of that authorized account. For example, account score 342 of FIG. 3B corresponds to an account performance score indicating a performance of a network resource (e.g., network resource 106) executing network resource code including code portion 302 on each event including in the sequence of events associated with authorized account 312. Additional account scores indicating a performance of the network resource executing the network resource code include code portion 302 may be generated for each event included in the sequence of events associated with authorized account 314-316. These account scores may be combined to obtain a first portfolio performance score (e.g., portfolio performance score 402). The first portfolio performance score represents a performance (e.g., a value, an efficiency, a bandwidth, a capacity, etc.) of the network resource when executing the network resource code including the initial code portion (e.g., code portion 302).

System 400 may include computing a second portfolio performance score 404 based on an analysis of each of the authorized accounts included in portfolio 310. The analysis includes evaluating a performance of a network resource executing network resource code including updated code portion 304 on each event included in the sequence of events (and/or including a particular label or other metadata indicating its applicability to updated code portion 304) of that authorized account. For example, account score 342 of FIG. 3B corresponds to an account performance score indicating a performance of a network resource (e.g., network resource 106) executing network resource code including updated code portion 304 on each event including in the sequence of events associated with authorized account 312. Additional account scores indicating a performance of the network resource executing the network resource code including updated code portion 304 may be generated for each event included in the sequence of events associated with authorized account 314-316. These account scores may be combined to obtain a second portfolio performance score (e.g., portfolio performance score 404). The second portfolio performance score represents a performance (e.g., a value, an efficiency, a bandwidth, a capacity, etc.) of the network resource when executing the network resource code including the update to the initial code portion (e.g., updated code portion 304).

In some embodiments, portfolio performance scores 402 and 404 may be provided to computing system 102. Computing system 102 may determine a change to a performance of the network resource if the network resource executes the network resource code using the update to the code portion (e.g., updated code portion 304) instead of the initial code portion (e.g., code portion 302). For example, computing system 102 can determine whether the performance of portfolio 310 improved when network resource code including updated code portion 304 was used instead of code portion 302. The performance of portfolio 310 may be classified as being improved by updated code portion 304 based on portfolio performance scores 402 and 404. For example, if portfolio performance score 404 is greater than portfolio performance score 402, then this may indicate that updated code portion 304 improves the performance of portfolio 310 as compared to code portion 302. As another example, if portfolio performance score 404 is greater than portfolio performance score 402 by at least a threshold amount (e.g., 25% improvement, 50% improvement, 100% improvement, etc.), then this can indicate that updated code portion 304 improves the performance of portfolio 310 as compared to code portion 302.

In some embodiments, an instruction (e.g., deployment instruction 410) may be generated based on portfolio performance scores 402, 404. For example, if computing system 102 determines, based on portfolio performance scores 402, 404, that updated code portion 304 improves a performance of network resource code executed by a network resource when evaluating portfolio 310 relative to code portion 302, then deployment instruction 410 may indicate that the network resource code used by network resource 106 at runtime (e.g., on production data) should be updated to include updated code portion 304. If computing system 102 determines, based on portfolio performance scores 402, 404, that updated code portion 304 does not improve a performance of network resource code executed by a network resource when evaluating portfolio 310 relative to code portion 302, then deployment instruction 410 may indicate that the network resource code used by network resource 106 at runtime (e.g., on production data) should not be updated to include updated code portion 304 and instead should continue to employ code portion 302.

In some embodiments, computing system 102 may be configured to deploy a network resource code update comprising the update to the code portion to cause the network resource to process real time production data using the update to the code portion based on the instruction (e.g., deployment instruction 410). For example, computing system 102 may instruct network resource 106 to use an updated version of the network resource code including updated code portion 304. As another example, computing system 102 may instruct network resource 106 to access updated code portion 304 when executing the network resource code instead of accessing code portion 302.

In some embodiments, the portfolio of authorized accounts comprises a plurality of authorized accounts. For example, the portfolio of authorized accounts may include 10³ or more authorized accounts, 10⁶ or more authorized accounts, 10⁹ or more authorized accounts, or other quantities of authorized accounts.

To compute the portfolio performance score, computing system 102 may be configured to select an authorized account (e.g., authorized account 312 of FIG. 3A) from the plurality of authorized accounts (e.g., authorized accounts 312-316). Event data representing a sequence of events (e.g., events 322a-322n) associated with the authorized account (e.g., authorized account 312) may be retrieved. Each event included in the sequence of events may occur between a first time and a second time. Using a corresponding supplementary virtual computing environment (e.g., virtual computing environments 120a-120n), a first account performance score (e.g., 342) may be computed based on the network resource processing the sequence of events using the code portion (e.g., code portion 302). The corresponding supplementary virtual computing environment may be used to compute a second account performance score (e.g., account performance score 344) based on the network resource processing the sequence of events using the update to the code portion (e.g., updated code portion 304). In some embodiments, an account performance score computed based on the network resource processing the sequence of events using the code portion may be computed for some or all of the authorized accounts. Similarly, an account performance score computed based on the network resource processing the sequence of events using the update to the code portion may be computed for some or all of the authorized accounts.

In some examples, the first account performance scores and the second account performance scores may be aggregated for the authorized accounts to obtain a first portfolio performance score (e.g., portfolio performance score 402) and a second portfolio performance score (e.g., portfolio performance score 404). In some embodiments, computing system 102 may be configured to compute a portfolio performance score based on the first portfolio performance score and the second portfolio performance score . For example, portfolio performance scores 402 and 404 may be used to determine a performance gradient for the network resource.

In some embodiments, computing system 102 may be configured to generate a network resource code update comprising the update to the code portion based on the portfolio performance gradient satisfying a network resource code update condition. The network resource code update condition being satisfied may include the portfolio performance gradient being greater than or equal to a portfolio performance gradient threshold. In some embodiments, deployment instruction 410 may be sent to multiple network resources within system 100 and/or client devices accessing those network resources. The network resource code update can ensure that any subsequent evaluations by the network resource (e.g., network resource 106) use the network resource code including updated code portion 304.

In some embodiments, computing system 102 may be configured to generate and cause a user interface to be displayed via a client device (e.g., client device 104). The user interface may include data representing the impact of the update to the code portion based on analysis of the update to the code portion on a plurality of authorized accounts included by the portfolio of authorized accounts. For example, a dashboard interface can be presented on client device 104 indicating how the performance of a network resource has changed over time (e.g., over the last N days, weeks, months, etc.).

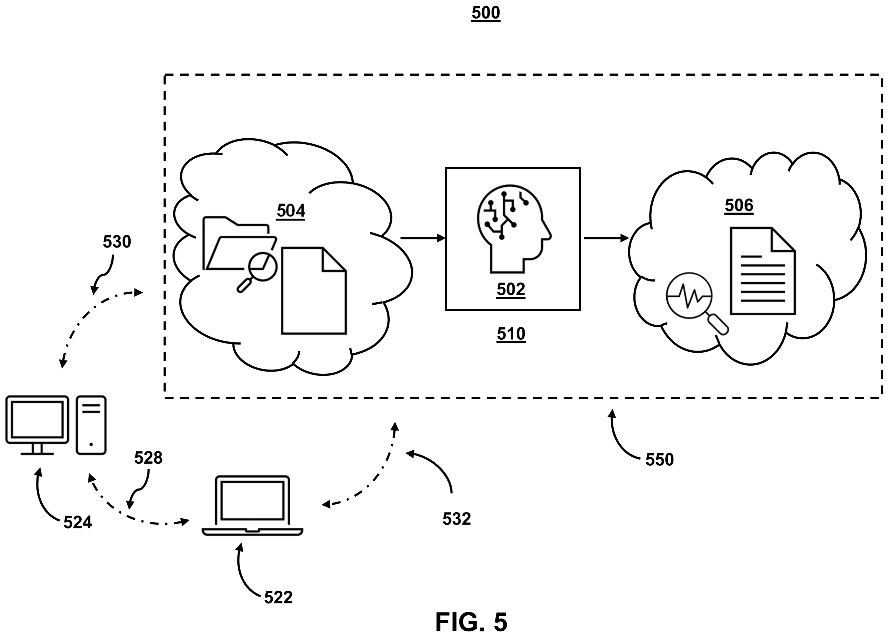

FIG. 5 shows illustrative components of a system used to enforce attribute level entitlements within a super-graph, in accordance with one or more embodiments. For example, FIG. 5 may show illustrative components for enforcing attribute level entitlements within a super-graph. As shown in FIG. 5, system 500 may include mobile device 522 and user terminal 524. While shown as a smartphone and personal computer, respectively, in FIG. 5, it should be noted that mobile device 522 and user terminal 524 may be any computing device, including, but not limited to, a laptop computer, a tablet computer, a hand-held computer, and other computer equipment (e.g., a server), including "smart," wireless, wearable, and/or mobile devices. FIG. 5 also includes cloud components 510. Cloud components 510 may alternatively be any computing device as described above, and may include any type of mobile terminal, fixed terminal, or other device. For example, cloud components 510 may be implemented as a cloud computing system and may feature one or more component devices. It should also be noted that system 500 is not limited to three devices. Users may, for instance, utilize one or more devices to interact with one another, one or more servers, or other components of system 500. It should be noted, that, while one or more operations are described herein as being performed by particular components of system 500, these operations may, in some embodiments, be performed by other components of system 500. As an example, while one or more operations are described herein as being performed by components of mobile device 522, these operations may, in some embodiments, be performed by components of cloud components 510. In some embodiments, the various computers and systems described herein may include one or more computing devices that are programmed to perform the described functions. Additionally, or alternatively, multiple users may interact with system 500 and/or one or more components of system 500. For example, in one embodiment, a first user and a second user may interact with system 500 using two different components.

With respect to the components of mobile device 522, user terminal 524, and cloud components 510, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 5, both mobile device 522 and user terminal 524 include a display upon which to display data (e.g., conversational response, queries, and/or notifications).

Additionally, as mobile device 522 and user terminal 524 are shown as touchscreen smartphones, these displays also function as user input interfaces. It should be noted that in some embodiments, the devices may have neither user input interfaces nor displays and may instead receive and display content using another device (e.g., a dedicated display device such as a computer screen, and/or a dedicated input device such as a remote control, mouse, voice input, etc.). Additionally, the devices in system 500 may run an application (or another suitable program). The application may cause the processors and/or control circuitry to perform operations related to generating dynamic conversational replies, queries, and/or notifications.

Each of these devices may also include electronic storage. The electronic storages may include non-transitory storage media that electronically store information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storage may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 5 also includes communication paths 528, 530, and 532. Communication paths 528, 530, and 532 may include the Internet, a mobile phone network, a mobile voice, or data network (e.g., a 5G or LTE network), a cable network, a public switched telephone network, or other types of communications networks or combinations of communications networks. Communication paths 528, 530, and 532 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 510 may include computing system 102, client device 104, network resource 106, virtual computing environment 120, or other components.

Cloud components 510 may include model 502, such as a machine learning model used to identify entitlement keywords, etc. (which may be referred to collectively as "models" herein). Model 502 may take inputs 504 and provide outputs 506. The inputs may include multiple datasets, such as a training dataset and a test dataset. Each of the plurality of datasets (e.g., input type) may include data subsets related to user data, predicted forecasts and/or errors, and/or actual forecasts and/or errors. In some embodiments, outputs 506 may be fed back to model 502 as input to train model 502 (e.g., alone or in conjunction with user indications of the accuracy of outputs 506, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., a class of computing tasks to be executed).

In a variety of embodiments, model 502 may update its configurations (e.g., weights, biases, or other parameters) based on the assessment of its prediction (e.g., outputs 506) and reference feedback information (e.g., user indication of accuracy, reference labels, or other information). In a variety of embodiments, where model 502 is a neural network, connection weights may be adjusted to reconcile differences between the neural network's prediction and reference feedback. In a further use case, one or more neurons (or nodes) of the neural network may require that their respective errors be sent backward through the neural network to facilitate the update process (e.g., backpropagation of error). Updates to the connection weights may, for example, be reflective of the magnitude of error propagated backward after a forward pass has been completed. In this way, for example, the model 502 may be trained to generate better predictions.

In some embodiments, model 502 may include an artificial neural network. In such embodiments, model 502 may include an input layer and one or more hidden layers. Each neural unit of model 502 may be connected with many other neural units of model 502. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 502 may be self-learning and trained, rather than explicitly programmed, and can perform significantly better in certain areas of problem solving, as compared to traditional computer programs. During training, an output layer of model 502 may correspond to a classification of model 502, and an input known to correspond to that classification may be input into an input layer of model 502 during training. During testing, an input without a known classification may be input into the input layer, and a determined classification may be output.

In some embodiments, model 502 may include multiple layers (e.g., where a signal path traverses from front layers to back layers). In some embodiments, back propagation techniques may be utilized by model 502 where forward stimulation is used to reset weights on the "front" neural units. In some embodiments, stimulation, and inhibition for model 502 may be more free flowing, with connections interacting in a more chaotic and complex fashion. During testing, an output layer of model 502 may indicate whether a given input corresponds to a classification of model 502 (e.g., a data item is relevant to the computing task to be executed).

In some embodiments, the model (e.g., model 502) may automatically perform actions based on outputs 506. In some embodiments, the model (e.g., model 502) may not perform any actions. The output of the model (e.g., model 502) may be used to further update the model by generating updated training data, including the input request and the predicted classification (i.e., relevant/not relevant).

In some embodiments, the model (e.g., model 502) may be used by computing system 102 to detect code errors, generate updates to correct the detected code errors, receive updates to network resource code, and/or generate network resource code. As an illustrative example, model 502 may comprise a generative artificial intelligence model, as described above, that is trained to generate updates to code portions. This model can be trained using training data including sample code errors and code changes to correct those code errors.

System 500 also includes API layer 550. API layer 550 may allow the system to generate summaries across different devices. In some embodiments, API layer 550 may be implemented on mobile device 522 or user terminal 524. Alternatively, or additionally, API layer 550 may reside on one or more of cloud components 510. API layer 550 (which may be a REST or Web services API layer) may provide a decoupled interface to data and/or functionality of one or more applications. API layer 550 may provide a common, language-agnostic way of interacting with an application. Web service APIs offer a well-defined contract, called WSDL, that describes the services in terms of their operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 550 may use various architectural arrangements. For example, system 500 may be partially based on API layer 550, such that there is strong adoption of SOAP and RESTful Web-services, using resources like Service Repository and Developer Portal, but with low governance, standardization, and separation of concerns. Alternatively, system 500 may be fully based on API layer 550, such that separation of concerns between layers like API layer 550, services, and applications is in place.

In some embodiments, the system architecture may use a microservice approach. Such systems may use two types of layers: Front-End Layer and Back-End Layer where microservices reside. In this kind of architecture, the role of the API layer 550 may provide integration between Front-End and Back-End. In such cases, API layer 550 may use RESTful APIs (exposition to front-end or even communication between microservices). API layer 550 may use AMQP (e.g., Kafka, RabbitMQ, etc.). API layer 550 may use incipient usage of new communications protocols such as gRPC, Thrift, etc.

In some embodiments, the system architecture may use an open API approach. In such cases, API layer 550 may use commercial or open-source API Platforms and their modules. API layer 550 may use a developer portal. API layer 550 may use strong security constraints applying WAF and DDoS protection, and API layer 550 may use RESTful APIs as standard for external integration.

As another example, instead of using RESTful APIs, a GraphQL API may be used, as mentioned above. Differing from RESTful systems, GraphQL can specify a single endpoint to provide requests. GraphQL uses a schema to indicate the different types of data that is included in a given sub-graph, the relationships of that data, and operations that can be performed on the data. The operations include, for example, query operations to retrieve data, mutation operations to modify data, and subscription operations.

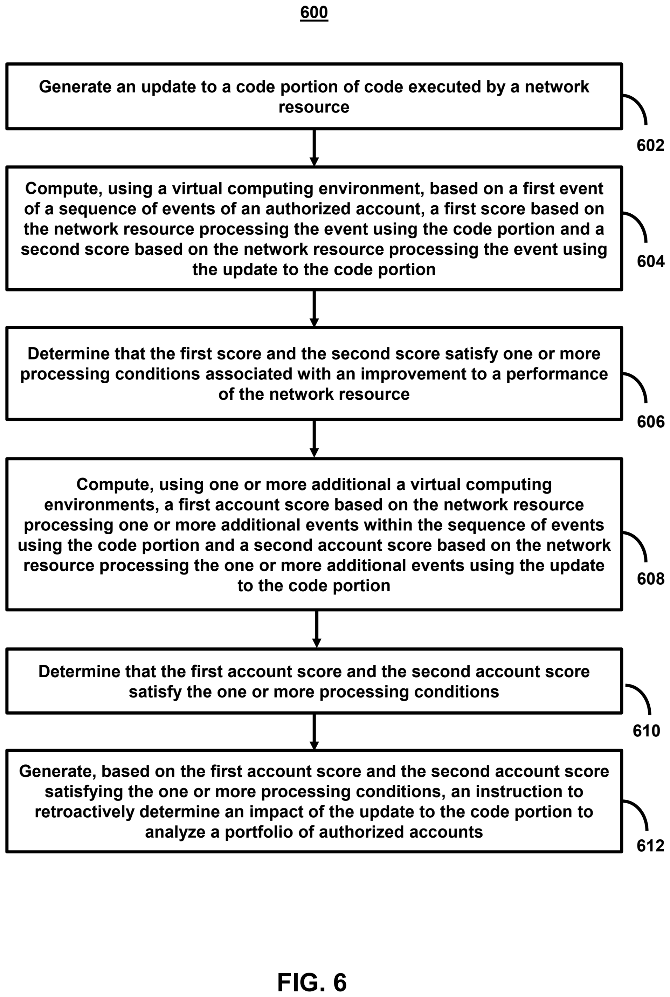

FIG. 6 shows a flowchart of a process 600 including steps involved in enforcing attribute level entitlements within a super-graph, in accordance with one or more embodiments. For example, systems 100, 300, 340, 400, and/or 500 may use process 600 (e.g., as implemented on one or more system components described above) in order to facilitate enforcement of attribute level entitlements within a super-graph.

At step 602, process 600 may include generating an update to a code portion of code executed by a network resource. In some embodiments, to generate the update to the code portion (e.g., updated code portion 304 of FIG. 3A), process 600 may include receiving a notification of a code error associated with the code portion (e.g., code portion 302). The update to the code portion may be generated based on the code error. In some embodiments, to generate the update to the code portion, process 600 may include receiving, from a client device (e.g., client device 104), an instruction (e.g., deployment instruction 410 of FIG. 4) including the update to the code portion.

At step 604, process 600 may include computing, using a virtual computing environment, based on a first event of a sequence of events of an authorized account, a first score based on the network resource processing the event using the code portion and a second score based on the network resource processing the event using the update to the code portion. In some embodiments, process 600 may include determining a label associated with the first event (e.g., event 322a). Computing system 102 may select the first event from the other events (e.g., events 322a-322n) of the sequence based on the label associated with the first event. In some embodiments, computing system 102 may be configured to provision the virtual computing environment (e.g., virtual computing environment 120) with the code portion (e.g., code portion 302), the update to the code portion (e.g., updated code portion 304), and event data comprising the first event (e.g., event 322a). The first score (e.g., score 306) and the second score (e.g., score 308) may be computed using the virtual computing environment.

At step 606, process 600 may include determining that the first score and the second score satisfy one or more processing conditions associated with an improvement to a performance of the network resource. In some embodiments, process 600 includes determining that the first score (e.g., score 306) and the second score (e.g., score 308) satisfy the processing conditions by determining that the second score is greater than the first score or that the second score is greater than or equal to a threshold score. In some embodiments, process 600 can determine that the first account score and the second account score satisfy the processing conditions by determining that the second account score is greater than the first account score or that the second account score is greater than or equal to a threshold account score.

At step 608, process 600 may include computing, using one or more additional a virtual computing environments, a first account score based on the network resource processing one or more additional events within the sequence of events using the code portion and a second account score based on the network resource processing the one or more additional events using the update to the code portion. In some embodiments, process 600 may include identifying the additional events (e.g., events 322a-322n) based on the first event (e.g., event 322a). A label associated with the first event may be determined and used by process 600 to select the additional events within the sequence of events based on each of the additional events including the label. In some embodiments, process 600 may include provisioning an additional virtual computing environment (e.g., virtual computing environments 120a-120n) for each of the one or more additional events with the code portion (e.g., code portion 302), the update to the code portion (e.g., updated code portion 304), and the additional event. In some examples, each of the virtual computing environments may be provisioned based on the first score (e.g., score 306) and the second score (e.g., score 308) satisfying the one or more processing conditions. In some embodiments, process 600 may include computing the first account score and the second account score in response to determining that the first score and the second score satisfy the processing conditions.

At step 610, process 600 may include determining that the first account score and the second account score satisfy the one or more processing conditions. In some embodiments, the first account score (e.g., account score 342) and the second account score (e.g., account score 344) may be determined to satisfy the processing conditions based on process 600 determining that the second account score is greater than the first account score or that the second account score is greater than or equal to a threshold account score. For example, computing system 102 may combine the first scores (e.g., scores 332a, 334a) to obtain the first account score (e.g., account score 342) and the second scores (e.g., scores 332b, 334b) to obtain the second account score (e.g., account score 344).

At step 612, process 600 may include generating, based on the first account score and the second account score satisfying the one or more processing conditions, an instruction to retroactively determine an impact of the update to the code portion to analyze a portfolio of authorized accounts. In some embodiments, process 600 may generate the instruction in response to determining that the first account score and the second account scorer satisfying the processing conditions. In some embodiments, process 600 may include deploying a network resource code update comprising the update to the code portion to cause the network resource to process real time production data using the update to the code portion based on the instruction. The impact of the update to the code portion may be determined and used to analyze the portfolio of authorized accounts and compute a portfolio performance score. The instruction may be generated based on the portfolio performance score exceeding a threshold portfolio performance score.

**It** is contemplated that the steps or descriptions of FIG. 6 may be used with any other embodiment of this disclosure. In addition, the steps and descriptions described in relation to FIG. 6 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 6.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for determining network resource code updates in real-time.
2. The method of embodiment 1, comprising: generating an update to a code portion of code executed by a network resource; computing a first score and a second score based on the network resource processing an event from a sequence of events using the code portion and the update to the code portion, respectively; determining that the first score and the second score satisfy one or more conditions; computing a first account score and a second account score based on the network resource processing one or more additional events of the sequence of events using the code portion and the update to the code portion, respectively; and generating an instruction to retroactively determine an impact of the update to the code portion to analyze a portfolio of accounts based on the one or more conditions being satisfied by the first account score and the second account score.
3. The method of embodiment 2, wherein generating the update to the code portion comprises: receiving a notification of a code error associated with the code portion.
4. The method of embodiment 3, wherein the update to the code portion is based on the code error.
5. The method of any one of embodiments 2-4, wherein generating the update to the code portion comprises: receiving an instruction comprising the update to the code portion.
6. The method of embodiment 5, wherein receiving the instruction comprises receiving the instruction from a client device.
7. The method of any one of embodiments 2-6, wherein computing the first score and the second score comprises: computing the first score and the second score using a virtual computing environment.
8. The method of embodiment 7, wherein the first score is based on the network resource processing the event using the code portion and the second score is based on the network resource processing the event using the update to the code portion.
9. The method of any one of embodiments 2-8, wherein computing the first account score and the second account score comprises computing the first account score and the second account score using one or more additional virtual computing environments.
10. The method of embodiment 9, wherein the first account score is based on the network resource processing the one or more additional events using the code portion and the second account score is based on the network resource processing the one or more additional events using the update to the code portion.
11. The method of any one of embodiments 2-10, wherein computing the first account score and the second account score comprises computing the first account score and the second account score responsive to determining the first score and the second score satisfying the one or more conditions.
12. The method of any one of embodiments 2-10, wherein computing the first account score and the second account score comprises computing the first account score and the second account score responsive to the first score and the second score satisfying the one or more conditions.
13. The method of any one of embodiments 2-12, further comprising: determining that the first account score and the second account score satisfy the one or more conditions.
14. The method of embodiment 13, wherein generating the instruction comprises generating the instruction responsive to determining that the first account score and the second account score satisfy the one or more conditions.
15. The method of any one of embodiments 2-14, wherein the first score and the second score are computed using a virtual computing environment, the method comprises: provisioning the virtual computing environment with the code portion, the update to the code portion, and event data comprising the event, wherein the first score and the second score are computed using the virtual computing environment.
16. The method of any one of embodiments 2-15, wherein the first account score and the second account score are computed using one or more additional virtual computing environments, the method further comprises: provisioning an additional virtual computing environment for each of the one or more additional events with the code portion, the update to the code portion, and the additional event.
17. The method of any one of embodiments 2-16, further comprising: determining a label associated with the event; and selecting the one or more additional events within the sequence of events based on each of the one or more additional events including the label.
18. The method of any one of embodiments 2-17, further comprising: identifying the one or more additional events based on the event, wherein one or more additional virtual computing environments are provisioned to compute the first account score and the second account score based on the first score and the second score satisfying the one or more conditions.
19. The method of any one of embodiments 2-18, wherein determining that the first score and the second score satisfy the one or more conditions comprises: determining that the second score is greater than the first score or that the second score is greater than or equal to a threshold score.
20. The method of any one of embodiments 2-19, wherein computing the first account score and the second account score comprises: determining, for each of the one or more additional events, a corresponding first value computed by the network resource processing the additional event using the code portion; determining, for each of the one or more additional events, a corresponding second value computed by the network resource processing the additional event using the update to the code portion; and aggregating the corresponding first value and the corresponding second value for each of the one or more additional events to obtain the first account score and the second account score, respectively.
21. The method of embodiment 20, wherein determining that the first account score and the second account score satisfy the one or more conditions comprises: determining that the second account score is greater than the first account score or that the second account score is greater than or equal to a threshold account score.
22. The method of any one of embodiments 2-21, further comprising: deploying a network resource code update comprising the update to the code portion to cause the network resource to process real time production data using the update to the code portion based on the instruction.
23. The method of any one of embodiments 2-22, wherein generating the instruction comprises: determining the impact of the update to the code portion to analyze the portfolio of accounts by computing a portfolio performance score, wherein the instruction is generated based on the portfolio performance score exceeding a threshold portfolio performance score.
24. The method of embodiment 23, wherein the portfolio of accounts comprises a plurality of authorized accounts, computing the portfolio performance score comprises: for each of the plurality of authorized accounts: retrieving event data representing a sequence of events associated with the authorized account, wherein each event included in the sequence of events occurs between a first time and a second time; and computing, using a corresponding supplementary virtual computing environment, a first account performance score based on the network resource processing the sequence of events using the code portion and a second account performance score based on the network resource processing the sequence of events using the update to the code portion; and aggregating the first account performance score and the second account performance score for the plurality of authorized accounts to obtain a first aggregated account performance score and a second aggregated account performance score, wherein the portfolio performance score is computed based on the first aggregated account performance score and the second aggregated account performance score.
25. The method of any one of embodiments 2-24, wherein the portfolio of accounts comprises a plurality of authorized accounts, the method further comprises: computing, using a supplementary virtual computing environment, a portfolio performance gradient indicating an improvement to a performance of the plurality of authorized accounts based on the network resource using the update to the code portion, wherein the instruction is generated based on the portfolio performance gradient indicating the improvement.
26. The method of embodiment 25, further comprising: generating a network resource code update comprising the update to the code portion based on the portfolio performance gradient satisfying a network resource code update condition, wherein the network resource code update condition being satisfied comprises the portfolio performance gradient being greater than or equal to a portfolio performance gradient threshold.
27. The method of any one of embodiments 2-26, further comprising: displaying a user interface via a client device comprising data representing the impact of the update to the code portion based on analysis of the update to the code portion on a plurality of authorized accounts included by the portfolio of accounts.
28. The method of any one of embodiments 2-27, wherein the one or more conditions comprise one or more processing conditions and the sequence of events comprises a sequence of events of an authorized account.
29. The method of embodiment 1-27, wherein network resource code updates are determined while reducing network resource consumption used to determine performance impacts of the network resource code updates.
30. A method for determining network resource code updates in real-time while reducing network resource consumption used to determine performance impacts of the network resource code updates, comprising: generating an update to a code portion of the network resource code executed by the network resource to process events including a first label; responsive to provisioning a secure virtual computing environment with (i) the code portion, (ii) the update to the code portion, and (iii) an event including the first label selected from the first sequence of events, computing, using the secure virtual computing environment, (a) a first performance score for the code portion by using the network resource to execute the code portion for the event and (b) a second performance score for the update to the code portion by using the network resource to execute the update to the code portion for the event; responsive to determining that the first performance score and the second performance score satisfy a network resource processing condition indicating that the update to the code portion improves a performance of the network resource, identifying one or more additional events from the first sequence of events including the first label, wherein the network resource processing condition is satisfied based on the second performance score being greater than the first performance score; for each of the one or more additional events: provisioning an additional secure virtual computing environment with (i) the code portion, (ii) the update to the code portion, and (iii) the additional event; and computing, using the additional secure virtual computing environment, (a) a first additional performance score for the code portion by using the network resource to execute the code portion for the additional event and (b) a second additional performance score for the update to the code portion for the additional event; responsive to determining that the first additional performance score and the second additional performance score satisfy the network resource processing condition, generating an instruction to retroactively determine an impact of the update to the code portion to analyze a portfolio of authorized accounts.
31. The method of embodiment 30, further comprising storing the network resource code used to process real-time production data using a network resource and first event data representing a first sequence of events associated with a first authorized account.
32. The method of embodiment 31, wherein the network resource code is stored using cloud-based memory.
33. The method of any of embodiments 30-32, wherein the method is performed using cloud-based control circuitry.
34. The method of any one of embodiments 30-22, wherein the portfolio of authorized accounts comprises a plurality of authorized accounts.
35. The method of embodiment 34, further comprising: determining, based on account event data associated with each of the plurality of authorized accounts, a portfolio performance gradient indicating an improvement to a performance of the plurality of authorized accounts based on the network resource using the update to the code portion to analyze the account event data and the network resource using the code portion to analyze the account event data; and generating a network resource code update based on the portfolio performance gradient satisfying a network resource code update condition, wherein the network resource code update condition being satisfied comprises the portfolio performance gradient being greater than or equal to a portfolio performance gradient threshold.
36. A method comprising: generating an update to a code portion of code executed by a network resource; computing, using a virtual computing environment, based on a first event of a sequence of events of an authorized account, a first score based on the network resource processing the event using the code portion and a second score based on the network resource processing the event using the update to the code portion; determining that the first score and the second score satisfy one or more processing conditions associated with an improvement to a performance of the network resource; computing, using one or more additional virtual computing environments, a first account score based on the network resource processing one or more additional events within the sequence of events using the code portion and a second account score based on the network resource processing the one or more additional events using the update to the code portion; determining that the first account score and the second account score satisfy the one or more processing conditions; and generating, based on the first account score and the second account score satisfying the one or more processing conditions, an instruction to retroactively determine an impact of the update to the code portion to analyze a portfolio of authorized accounts.
37. One or more non-transitory, computer-readable mediums storing instructions that, when executed by a data processing apparatus, cause the data processing apparatus to perform operations comprising those of any of embodiments 1-36.
38. A system comprising one or more processors; and memory-storing instructions that, when executed by the processors, cause the processors to effectuate operations comprising those of any of embodiments 1-36.
39. A system comprising means for performing any of embodiments 1-36.
40. A system for determining network resource code updates in real-time while reducing network resource consumption used to determine performance impacts of the network resource code updates, comprising:
   cloud-based memory configured to store network resource code used to process real-time production data using a network resource and first event data representing a first sequence of events associated with a first authorized account;
   cloud-based control circuitry configured to:
      generate an update to a code portion of the network resource code executed by the network resource to process events including a first label;
      responsive to provisioning a secure virtual computing environment with (i) the code portion, (ii) the update to the code portion, and (iii) an event including the first label selected from the first sequence of events, compute, using the secure virtual computing environment, (a) a first performance score for the code portion by using the network resource to execute the code portion for the event and (b) a second performance score for the update to the code portion by using the network resource to execute the update to the code portion for the event;
      responsive to determining that the first performance score and the second performance score satisfy a network resource processing condition indicating that the update to the code portion improves a performance of the network resource, identify one or more additional events from the first sequence of events including the first label, wherein the network resource processing condition is satisfied based on the second performance score being greater than the first performance score;
      for each of the one or more additional events:
         provision an additional secure virtual computing environment with (i) the code portion, (ii) the update to the code portion, and (iii) the additional event; and
         compute, using the additional secure virtual computing environment, (a) a first additional performance score for the code portion by using the network resource to execute the code portion for the additional event and (b) a second additional performance score for the update to the code portion for the additional event;
      responsive to determining that the first additional performance score and the second additional performance score satisfy the network resource processing condition, generate an instruction to retroactively determine an impact of the update to the code portion to analyze a portfolio of authorized accounts.
41. The system of embodiment 40, wherein the portfolio of authorized accounts comprises a plurality of authorized accounts, the cloud-based control circuitry is further configured to:
   determine, based on account event data associated with each of the plurality of authorized accounts, a portfolio performance gradient indicating an improvement to a performance of the plurality of authorized accounts based on the network resource using the update to the code portion to analyze the account event data and the network resource using the code portion to analyze the account event data; and
   generate a network resource code update based on the portfolio performance gradient satisfying a network resource code update condition, wherein the network resource code update condition being satisfied comprises the portfolio performance gradient being greater than or equal to a portfolio performance gradient threshold.
42. The system of embodiment 41, wherein the cloud-based control circuitry is further configured to:
   deploy, based on the portfolio performance gradient satisfying the network resource code update condition, the network resource code update to the network resource such that events from real time production data that include the first label are analyzed by the network resource using the update to the code portion.
43. A method, implemented using one or more processors of a computing system, comprising:
   generating an update to a code portion of code executed by a network resource;
   computing, using a virtual computing environment, based on a first event of a sequence of events of an authorized account, a first score based on the network resource processing the event using the code portion and a second score based on the network resource processing the event using the update to the code portion;
   determining that the first score and the second score satisfy one or more processing conditions associated with an improvement to a performance of the network resource;
   computing, using one or more additional virtual computing environments, a first account score based on the network resource processing one or more additional events within the sequence of events using the code portion and a second account score based on the network resource processing the one or more additional events using the update to the code portion;
   determining that the first account score and the second account score satisfy the one or more processing conditions; and
   generating, based on the first account score and the second account score satisfying the one or more processing conditions, an instruction to retroactively determine an impact of the update to the code portion to analyze a portfolio of authorized accounts.
44. The method of embodiment 43, wherein generating the update to the code portion comprises:
   receiving a notification of a code error associated with the code portion, wherein the update to the code portion is based on the code error.
45. The method of any of embodiments 43-44, wherein generating the update to the code portion comprises:
   receiving, from a client device, an instruction comprising the update to the code portion.
46. The method of any of embodiments 43-45, further comprising:
   provisioning the virtual computing environment with the code portion, the update to the code portion, and event data comprising the first event, wherein the first score and the second score are computed using the virtual computing environment.
47. The method of any of embodiments 43-46, further comprising:
   provisioning an additional virtual computing environment for each of the one or more additional events with the code portion, the update to the code portion, and the additional event.
48. The method of any of embodiments 43-47, further comprising:
   determining a label associated with the first event; and
   selecting the one or more additional events within the sequence of events based on each of the one or more additional events including the label.
49. The method of any of embodiments 43-48, further comprising:
   identifying the one or more additional events based on the first event, wherein the one or more additional virtual computing environments are provisioned based on the first score and the second score satisfying the one or more processing conditions.
50. The method of any of embodiments 43-49, wherein determining that the first score and the second score satisfy the one or more processing conditions comprises:
   determining that the second score is greater than the first score or that the second score is greater than or equal to a threshold score.
51. The method of any of embodiments 43-50, wherein computing the first account score and the second account score comprises:
   determining, for each of the one or more additional events, a corresponding first value computed by the network resource processing the additional event using the code portion;
   determining, for each of the one or more additional events, a corresponding second value computed by the network resource processing the additional event using the update to the code portion; and
   aggregating the corresponding first value and the corresponding second value for each of the one or more additional events to obtain the first account score and the second account score, respectively.
52. The method of embodiment 51, wherein determining that the first account score and the second account score satisfy the one or more processing conditions:
   determining that the second account score is greater than the first account score or that the second account score is greater than or equal to a threshold account score.
53. The method of any of embodiments 43-52, further comprising:
   deploying a network resource code update comprising the update to the code portion to cause the network resource to process real time production data using the update to the code portion based on the instruction.
54. The method of any of embodiments 43-53, wherein generating the instruction comprises:
   determining the impact of the update to the code portion to analyze the portfolio of authorized accounts by computing a portfolio performance score, wherein the instruction is generated based on the portfolio performance score exceeding a threshold portfolio performance score.
55. The method of embodiment 54, wherein the portfolio of authorized accounts comprises a plurality of authorized accounts, computing the portfolio performance score comprises:
   for each of the plurality of authorized accounts:
      retrieving event data representing a sequence of events associated with the authorized account, wherein each event included in the sequence of events occurs between a first time and a second time; and
      computing, using a corresponding supplementary virtual computing environment, a first account performance score based on the network resource processing the sequence of events using the code portion and a second account performance score based on the network resource processing the sequence of events using the update to the code portion; and
   aggregating the first account performance score and the second account performance score for the plurality of authorized accounts to obtain a first aggregated account performance score and a second aggregated account performance score, wherein the portfolio performance score is computed based on the first aggregated account performance score and the second aggregated account performance score.
56. The method of any of embodiments 43-55, wherein the portfolio of authorized accounts comprises a plurality of authorized accounts, the method further comprises:
   computing, using a supplementary virtual computing environment, a portfolio performance gradient indicating an improvement to a performance of a plurality of authorized accounts based on the network resource using the update to the code portion, wherein the instruction is generated based on the portfolio performance gradient indicating the improvement.
57. The method of embodiment 56, further comprising:
   generating a network resource code update comprising the update to the code portion based on the portfolio performance gradient satisfying a network resource code update condition, wherein the network resource code update condition being satisfied comprises the portfolio performance gradient being greater than or equal to a portfolio performance gradient threshold.
58. The method of any of embodiments 43-57, further comprising:
   displaying a user interface via a client device comprising data representing the impact of the update to the code portion based on analysis of the update to the code portion on a plurality of authorized accounts included by the portfolio of authorized accounts.
59. One or more non-transitory computer-readable media storing computer program instructions that, when executed by one or more processors, effectuate operations comprising:
   generating an update to a code portion of code executed by a network resource;
   computing a first score and a second score based on the network resource processing an event from a sequence of events using the code portion and the update to the code portion, respectively;
   responsive to the first score and the second score satisfying one or more conditions, computing a first account score and a second account score based on the network resource processing one or more additional events of the sequence of events using the code portion and the update to the code portion, respectively; and
   generating an instruction to retroactively determine an impact of the update to the code portion to analyze a portfolio of accounts based on the one or more conditions being satisfied by the first account score and the second account score.

## Claims

1. A system for determining network resource code updates in real-time while reducing network resource consumption used to determine performance impacts of the network resource code updates, comprising:
cloud-based memory configured to store network resource code used to process real-time production data using a network resource and first event data representing a first sequence of events associated with a first authorized account;
cloud-based control circuitry configured to:
generate an update to a code portion of the network resource code executed by the network resource to process events including a first label;
responsive to provisioning a secure virtual computing environment with (i) the code portion, (ii) the update to the code portion, and (iii) an event including the first label selected from the first sequence of events, compute, using the secure virtual computing environment, (a) a first performance network efficiency for the code portion by using the network resource to execute the code portion for the event and (b) a second performance network efficiency for the update to the code portion by using the network resource to execute the update to the code portion for the event;
responsive to determining that the first performance network efficiency and the second performance network efficiency satisfy a network resource processing condition indicating that the update to the code portion improves a performance of the network resource, identify one or more additional events from the first sequence of events including the first label, wherein the network resource processing condition is satisfied based on the second performance network efficiency being greater than the first performance network efficiency;
for each of the one or more additional events:
provision an additional secure virtual computing environment with (i) the code portion, (ii) the update to the code portion, and (iii) the additional event; and
compute, using the additional secure virtual computing environment, (a) a first additional performance network efficiency for the code portion by using the network resource to execute the code portion for the additional event and (b) a second additional performance network efficiency for the update to the code portion for the additional event;
responsive to determining that the first additional performance network efficiency and the second additional performance network efficiency satisfy the network resource processing condition, generate an instruction to retroactively determine an impact of the update to the code portion to analyze a portfolio of authorized accounts.

2. The system of claim 1, wherein the portfolio of authorized accounts comprises a plurality of authorized accounts, the cloud-based control circuitry is further configured to:
determine, based on account event data associated with each of the plurality of authorized accounts, a portfolio performance gradient indicating an improvement to a performance of the plurality of authorized accounts based on the network resource using the update to the code portion to analyze the account event data and the network resource using the code portion to analyze the account event data; and
generate a network resource code update based on the portfolio performance gradient satisfying a network resource code update condition, wherein the network resource code update condition being satisfied comprises the portfolio performance gradient being greater than or equal to a portfolio performance gradient threshold;
wherein, optionally, the cloud-based control circuitry is further configured to: deploy, based on the portfolio performance gradient satisfying the network resource code update condition, the network resource code update to the network resource such that events from real time production data that include the first label are analyzed by the network resource using the update to the code portion.

3. A method, implemented using one or more processors of a computing system, comprising:
generating an update to a code portion of code executed by a network resource;
computing, using a virtual computing environment, based on a first event of a sequence of events of an authorized account, a first network efficiency based on the network resource processing the event using the code portion and a second network efficiency based on the network resource processing the event using the update to the code portion;
determining that the first network efficiency and the second network efficiency satisfy one or more processing conditions associated with an improvement to a performance of the network resource;
computing, using one or more additional virtual computing environments, a first account network efficiency based on the network resource processing one or more additional events within the sequence of events using the code portion and a second account network efficiency based on the network resource processing the one or more additional events using the update to the code portion;
determining that the first account network efficiency and the second account network efficiency satisfy the one or more processing conditions; and
generating, based on the first account network efficiency and the second account network efficiency satisfying the one or more processing conditions, an instruction to retroactively determine an impact of the update to the code portion to analyze a portfolio of authorized accounts.

4. The method of claim 3, wherein generating the update to the code portion comprises:
(a) receiving a notification of a code error associated with the code portion, wherein the update to the code portion is based on the code error; and/or
(b) receiving, from a client device, an instruction comprising the update to the code portion.

5. The method of claim 3 or 4, further comprising:
(a) provisioning the virtual computing environment with the code portion, the update to the code portion, and event data comprising the first event, wherein the first network efficiency and the second network efficiency are computed using the virtual computing environment; and/or
(b) provisioning an additional virtual computing environment for each of the one or more additional events with the code portion, the update to the code portion, and the additional event.

6. The method of any one of claims 3 to 5, further comprising:
determining a label associated with the first event; and
selecting the one or more additional events within the sequence of events based on each of the one or more additional events including the label.

7. The method of any one of claims 3 to 6, further comprising:
identifying the one or more additional events based on the first event, wherein the one or more additional virtual computing environments are provisioned based on the first network efficiency and the second network efficiency satisfying the one or more processing conditions.

8. The method of any one of claims 3 to 7, wherein determining that the first network efficiency and the second network efficiency satisfy the one or more processing conditions comprises:
determining that the second network efficiency is greater than the first network efficiency or that the second network efficiency is greater than or equal to a threshold network efficiency.

9. The method of any one of claims 3 to 8, wherein computing the first account network efficiency and the second account network efficiency comprises:
determining, for each of the one or more additional events, a corresponding first value computed by the network resource processing the additional event using the code portion;
determining, for each of the one or more additional events, a corresponding second value computed by the network resource processing the additional event using the update to the code portion; and
aggregating the corresponding first value and the corresponding second value for each of the one or more additional events to obtain the first account network efficiency and the second account network efficiency, respectively;
wherein, optionally, determining that the first account network efficiency and the second account network efficiency satisfy the one or more processing conditions comprises: determining that the second account network efficiency is greater than the first account network efficiency or that the second account network efficiency is greater than or equal to a threshold account network efficiency.

10. The method of any one of claims 3 to 9, further comprising:
deploying a network resource code update comprising the update to the code portion to cause the network resource to process real time production data using the update to the code portion based on the instruction.

11. The method of any one of claims 3 to 10, wherein generating the instruction comprises:
determining the impact of the update to the code portion to analyze the portfolio of authorized accounts by computing a portfolio performance network efficiency, wherein the instruction is generated based on the portfolio performance network efficiency exceeding a threshold portfolio performance network efficiency;

12. The method of claim 11, wherein the portfolio of authorized accounts comprises a plurality of authorized accounts, computing the portfolio performance network efficiency comprises:
for each of the plurality of authorized accounts:
retrieving event data representing a sequence of events associated with the authorized account, wherein each event included in the sequence of events occurs between a first time and a second time; and
computing, using a corresponding supplementary virtual computing environment, a first account performance network efficiency based on the network resource processing the sequence of events using the code portion and a second account performance network efficiency based on the network resource processing the sequence of events using the update to the code portion; and
aggregating the first account performance network efficiency and the second account performance network efficiency for the plurality of authorized accounts to obtain a first aggregated account performance network efficiency and a second aggregated account performance network efficiency, wherein the portfolio performance network efficiency is computed based on the first aggregated account performance network efficiency and the second aggregated account performance network efficiency.

13. The method of any one of claims 3 to 12, wherein the portfolio of authorized accounts comprises a plurality of authorized accounts, the method further comprises:
computing, using a supplementary virtual computing environment, a portfolio performance gradient indicating an improvement to a performance of a plurality of authorized accounts based on the network resource using the update to the code portion, wherein the instruction is generated based on the portfolio performance gradient indicating the improvement.
wherein, optionally, the method further comprises: generating a network resource code update comprising the update to the code portion based on the portfolio performance gradient satisfying a network resource code update condition, wherein the network resource code update condition being satisfied comprises the portfolio performance gradient being greater than or equal to a portfolio performance gradient threshold.

14. The method of any one of claims 3 to 13, further comprising:
displaying a user interface via a client device comprising data representing the impact of the update to the code portion based on analysis of the update to the code portion on a plurality of authorized accounts included by the portfolio of authorized accounts.

15. One or more non-transitory computer-readable media storing computer program instructions that, when executed by one or more processors, effectuate operations comprising:
generating an update to a code portion of code executed by a network resource;
computing, using an virtual computing environment, based on a first event of a sequence of events of an authorized account, a first network efficiency based on the network resource processing the event using the code portion and a second network efficiency based on the network resource processing the event using the update to the code portion;
responsive to determining that the first network efficiency and the second network efficiency satisfy one or more processing conditions, computing, using one or more additional virtual computing environments, a first account network efficiency based on the network resource processing one or more additional events within the sequence of events using the code portion and a second account network efficiency based on the network resource processing the one or more additional events using the update to the code portion; and
responsive to determining that the first account network efficiency and the second account network efficiency satisfy the one or more processing conditions, generating an instruction to retroactively determine an impact of the update to the code portion to analyze a portfolio of authorized accounts.
